# EUROPÄISCHE PATENTSCHRIFT

(11) **EP 1 807 360 B1**
(45) Veröffentlichungstag und Bekanntmachung des Hinweises auf die Patenterteilung: **26.10.2011**
(21) Anmeldenummer: 05797153.3
(22) Anmeldetag: 28.09.2005
(51) Int. Cl.: C02F 1/52, C02F 1/68

(54) **VORRICHTUNG UND VERFAHREN ZUR ABWASSERREINIGUNG**
DEVICE AND METHOD FOR PURIFYING WASTE WATER
DISPOSITIF ET PROCEDE POUR PURIFIER LES EAUX USEES

(30) Priorität: 28.09.2004 DE 102004047010
(43) Veröffentlichungstag der Anmeldung: 18.07.2007
(73) Patentinhaber: Kowitec Ingenieurgesellschaft für Wassertechnik MB, 18055 Rostock (DE)
(72) Erfinder: ROTHER, Uwe, 01454 Ullersdorf (DE); WIEMEYER, Frank, 16303 Schwedt (DE); KOPP, Eberhard, 16303 Schwedt (DE); GUNDLACH, Christoph, 18055 Rostock (DE)
(74) Vertreter: Fleuchaus, Andrea
(86) Internationale Anmeldenummer: PCT/EP2005/054876
(87) Internationale Veröffentlichungsnummer: WO 2006/035042

(56) Entgegenhaltungen:
- EP-A- 1 008 561
- EP-A- 1 008 561
- EP-A- 1 186 706
- WO-A-98/31634
- WO-A-98/31634
- DE-A1- 4 003 055
- US-A- 3 354 028
- W. J. NG, ANTHONY C. C. GOH, J. H. TAY: "Palm Oil Mill Effluent Treatment - Liquid-Solid Separation With Dissolved Air Flotation" BIOLOGICAL WASTES, Bd. 25, Nr. 4, 1988, Seiten 257-268, XP002364045

## Beschreibung

Die vorliegenden Erfindung betrifft eine Vorrichtung und ein Verfahren zur Reinigung von Wasser, insbesondere zur kontinuierlichen Reinigung von Wasser in der Papierindustrie.

Solche Verfahren zur Reinigung insbesondere von Industrieabwässern sind im Stand der Technik bekannt.

Die Reinigung von Wässern insbesondere in der Industrie ist einerseits notwendig, damit solche Wässer in die öffentliche Kanalisation eingeleitet werden können und hierbei unterhalb der gesetzlich vorgegebenen Werte bezüglich der Inhaltsstoffe liegen. Ferner möchte man auch eine möglichst hohe Rückführungsquote der eingesetzten Wässer, insbesondere von Prozesswasser, in den Produktionsprozess haben. Hierzu werden Reinigungsstufen verwendet, mit welchen die Wasserqualität so verbessert wird, dass eine Rückführung in den Produktionsprozess möglich ist und der Verbrauch an Wasser in bezug auf die hergestellte Warenmenge reduzierte werden kann.

Gemäß dem Stand der Technik kann die gewünschte Reinigungswirkung durch beispielsweise mechanische, chemische oder physikalische, biologische oder Methoden weitergehender Behandlung, wie beispielsweise Mikrosiebe oder Sandfilter, erfolgen.

Es werden ferner beispielsweise drei Reinigungsstufen miteinander kombiniert, wobei in der ersten Stufe vornehmlich ungelöste Stoffe entfernt werden. Hierzu verwendet man mechanische, gelegentlich durch chemische Hilfsmittel unterstützte Methoden.

Als zweite Stufe werden häufig biologische Behandlungen eingesetzt, mit welchen organisch gelöste Stoffe weitgehend entfernt werden können. An diese zweite Stufe kann sich eine dritte Stufe anschließen, bei welcher man durch Fällung anorganisch gelöste Stoffe, zum Beispiel eutrophierten Phosphate, abscheidet. Werden besonders hohe Anforderungen an die zu erzielende Sauberkeit des Wassers gestellt, werden weitergehende Reinigungsstufen verwendet, die aus den vorgenannten Methoden ausgewählt werden können.

Gemäß einer weiteren im Stand der Technik bekannten Methode zur Aufbereitung von Wasser erfolgt die Reinigung in zwei Stufen, wobei in einem ersten Verfahrensschritt das Wasser anaerob und in einem darauf folgenden Schritt aerob gereinigt wird. Bei der anaeroben Reinigung werden insbesondere im Wasser die organischen Stoffe unter dem Einsatz von anaeroben Mikroorganismen unter Bildung von Biomasse, wie beispielsweise Methangas, abgebaut. Die Reduzierung der organischen Fracht kann In einem solchen Verfahrensschrftt bis zu 80 % des CSB-Wertes (chemischer Sauerstoffbedarf) betragen.

In der zweiten Stufe eines solchen Aufbereitungsverfahrens wird vorzugsweise eine aerobe Klärung vorgenommen, bei der dem Wasser (aus der anaeroben Stufe) Luftsauerstoff zugeführt wird. Solche Verfahren können beispielsweise Kontaktschiammverfahren bzw. Belebtschiammverfahren sein, bei welchen mit Mlrkoorganismen das Wasser gereinigt wird. Die Reinigung in solchen aeroben Stufen kann bis zu 60 % des CSB-Wertes betragen.

Neben der Reduzierung der CSB bzw. BSB-Fracht (biologischer Sauerstoffbedarf) kann es unter Umständen ferner notwendig sein, dass die zu reinigenden Wässer**,** Insbesondere wenn es sich um Produktionswässer bei der Papierherstellung handelt, hohe Salzgehalte, Insbesondere hohe Härtegrade aufweisen. Hierdurch kann es insbesondere bei kritischen Produktlonsprozessen zu einer Verkalkung der Produktionsaniage bzw. zu einer Beeinträchtigung der Produktionsanlage bis hin zum Ausfall der Produktion kommen.

Aus diesem Grund kann es u.a. auch notwendig sein, die Menge an zurückgeführtem Wasser In den Produktionskreislauf zu reduzieren bzw. ganz zu unterbinden, um Produktionsausfälle bzw. Produktionsstörungen zu verhindern. Ferner können bei hohem Härtegrad, insbesondere bei variierenden pH-Werten des Produktionswassers In Kombination mit Rohrieitungsführungen und der Prozessgestaltung (Belüftung durch Freifall), Entgasungen des Wassers stattfinden, welche wiederum zu teilweise erheblichen Störungen des Herstellungsprozesses führen können und In der Qualität des Produktes negativ zu Buche schlagen.

Im Stand der Technik sind ferner auch Verfahren und Vorrichtungen zur Reinigung von Abwässern bekannt. So ist aus der DE 40 03 044 A1 ein Verfahren zur Aufarbeitung von industriellem Abwasser sowie eine Vorrichtung zur Durchführung des Verfahrens bekannt, bei welchem unter anderem durch den Einsatz von grenzflächenaktiven organischen Polymeren ein biokompartibles Abwasser erzeugt wird. Ferner ist die EP 1 008 561 A2 bekannt, welche eine Technologie zur Reduzierung der Kalziumhärte in wiederaufbereitem Wasser von Papierfabriken betrifft. Schließlich ist auch die WO 9831639 bekannt, welche ein Verfahren zum Reinigen von Flüssigkeiten mittels Flotation betrifft. Hierbei wird dem zu reinigenden Wasser vor der Flotation eine Base zugegeben, die jedoch nachteilig zu Ausfällungen im Rohrleitungssystem führt.

Der vorliegenden Erfindung liegt die Aufgabe zugrunde, eine Vorrichtung und ein Verfahren für die Aufbereitung von Wasser zur verfügung zu stellen, welche einerseits die Im Stand der Technik bekannten Nachteile wenigstens teilweise reduziert, kostengünstig bereitzustellen und Insbesondere auch In vorhandene Anlagen einfach zu Integrieren ist.

Diese Aufgabe wird erfindungsgemäß mit einer Vorrichtung zum Reinigen von Wasser, Insbesondere zum kontinulerlichen Reinigen von Wasser In der Paplerindustrie, gemäß Anspruch 1 gelöst. Ferner wird die Aufgabe auch durch ein Verfahrens zur Reinigung von Wasser gemäß Anspruch 4 gelöst.

Bevorzugte Ausführungsformen der erfindungsgemäßen Vorrichtung bzw. des erfindungsgemäßen Verfahrens sind Gegenstand der Unteransprüche.

Erfindungsgemäß weist die Vorrichtung zur Reinigung von Wasser, Insbesondere zur kontinuierilchen Reinigung von Wasser In der Papierindustrie, wenigstens einen Zulauf für das zu reinigende Wasser und wenigstens einen Ablauf für das gereinigte Wasser auf. Die Vorrichtung umfasst ferner wenigstens eine Verdichtungseinrichtung für wenigstens einen Teilstrom des zugeführte Wassers und ferner eine Injektionseinrichtung zur injektion wenigstens eines Gases In das Wasser. In einer Expansionseinrichtung wird wenigstens der Teilstrom, vorzugsweise der Gesamtstrom des In die Vorrichtung geführten Wassers, entspannt, wobei die hierbei entstehenden unterschiedlichen Phasen des Wassers in einer Vorrichtung derart voneinander getrennt werden, dass gereinigtes Wasser der Anlage entnommen werden kann. Die Expansionseinrichtung kann gemäß der vorliegenden Erfindung als getrennte vorrichtung oder aber auch als integrierte Vorrichtung insbesondere innerhalb einer der Verdichtung nachgeschalteten Vorrichtung wie zum Beispiel eines Belebtschlammbeckens ausgeführt sein Die erfindungsgemäße Vorrichtung weist ferner wenigstens ein Kontrollsystem auf, welches wenigstens einen Prozessparameter des Wassers bzw. der Vorrichtung erfasst und wenigstens die Zugabe wenigstens eines Additivs In Abhängigkeit des erfassten Prozessparameters kontrolliert

Ais zu reinigendes Wasser wird gemäß der vorliegenden Erfindung eine Flüssigkeit verstanden, die neben gelösten Anteilen verschiedener Prozesskomponenten auch unterschiedllche Feststoffanteile aufweisen kann. Die gelösten Substanzen können für sich unter Raumbedingungen sowohl Festsubstanzen, flüssigkeiten und/oder Gase sein, wobei das verhältnis der unterschiedlichen Stoffe In dem Wasser teilweise sogar erheblich, vorzugsweise in Abhängigkeit der vorgelagerten Prozessstufe, variieren kann.

Solch ein Wasser wird u.a. auch ais Abwasser oder Prozesswasser bezeichnet, wobei sich diese Bezeichnungen Im Wesentlichen auf die nachfolgende Verwertung des entsprechenden gereinigten Wassers bezieht. So werden Abwässer üblicherweise nach der Reinigung in einer Kanalisation abgeführt und Produktionswasser dem Henstallungsprozess zurückgeführt.

Als gereinigtes Wasser wird gemäß der vorliegenden Erfindung eine Flüssigkeit verstanden, bei welcher mittels einem Verfahren bzw. mit einer Vorrichtung eine vorgegebene Menge an Feststoffen, gelösten bzw. organischen und/oder anorganischen Substanzen entfernt wurde. Die so aufbereitete Flüssigkeit kann in einem nachfolgenden Prozess als geeignetes Medium wieder zugeführt werden oder aber auch bei Abwässern z.B. in die Kanalisation geleitet werden.

Innerhalb einer Verdichtungseinrichtung wird ein gereinijter Tellstrom des in die Vorrichtung eingebrachten Wassers beispielsweise mittels einer Pumpe und oder eines Ventils verdichtet, wodurch Insbesondere der Druck innerhalb dieses Bereich deutlich erhöht wird. So liegt der Druck beispielsweise zwischen 0,5 und 10 bar, vorzugsweise zwischen 3 und 7 bar und besonders bevorzugt zwischen 5 und 6 bar. Diesem verdichteten Wasser wird gemäß der vorliegenden Erfindung vorzugsweise mittels einer Injektionseinrichtung eine vorgegebene Menge an Gas zugeführt und hierin wenigstens teilweise gelöst**.**

Das Gas ist gemäß einer bevorzugten Ausführungsform komprimierte Luft, zu verwenden, die Insbesondere in ihrer Zusammensetzung bezüglich der Einzelkomponenten variieren können.

Die Injektionselnrichtung ist gemäß der vorliegenden Erfindung eine Düse oder eine entsprechend gestaltete Auslassöffnung**,** die eine möglichst homogene Verteilung des Gases In dem Wasserstrom gewährieistet. Solche Injektionseinrichtungen sind vom Stand der Technik bekannt, so dass an dieser Stelle nicht näher darauf eingegangen werden muss.

Das verdichtete und mit Gas versetzte Wasser wird einer Expansionseinrichtung zugeführt, in welcher im wesentlichen der Druck des Gas- / Flüssigkeitsgemisches abgebaut wird, wobei dies dann Passiert, wenn der komprimierte und mit Gas versetzte Teilstrom mit dem weiteren Wasser bereits zusammengeführt wurde.

Dies stellt eine bevorzugte Ausführungsform der Wasserführung innerhalb der Vorrichtung dar, wobei darauf hingewiesen wird, dass es selbstverständlich auch im Sinn der vorliegenden Erfindung liegt, nur einen Teilstrom des zu reinigenden Wassers mit der erfindungsgemäßen Vorrichtung zu behandeln.

Die Expansion erfolgt gemäß einer besonders bevorzugten Ausführungsform der vorliegenden Erfindung wenigstens in einem Ruhebereich der Vorrichtung, wobei sich an diesen Ruhebereich die Vorrichtung zum Trennen der unterschiedlichen Phasen des Wassers anschießt Solch eine Vorrichtung kann beispielsweise ein Flotations- und/oder Sedimentationsbecken sein, wobei im oberen Bereich das Flotat sich abscheidet, welches durch die Expansion des mit Gas versetzten Wassers erzeugt wird. An diesen Luftbläschen werden, wie im Stand der Technik bekannt ist, Stoffe gebunden und ausgetragen, die in Abhängigkeit ihrer Größe und dem spezifische Gewicht durch die Blase an die Oberfläche der Flüssigkeit getragen werden oder, wenn sie im Verhältnis zum Auftrieb mit der verbundenen Gasblase bzw. Gasblasen zu schwer sind, auf den Boden des Sedimentationsbereiches absinken. Aus diesem Grund spricht die vorliegende Erfindung von unterschiedlichen Phasen, die sich beispielsweise aus einer Mischung von Gasblasen mit Feststoffen und einem flüssigen Anteil zusammensetzen und in Abhängigkeit des spezifischen Gewichtes an die Oberfläche der Flüssigkeitssäule bzw. auf den Boden der Flüssigkeitssäule bewegt werden. Das von diesen Stoffen gereinigte Wasser wird aus dem Mittelbereich des Flotations-/Sodimentationsbehäiters abgeführt und einer nachfolgenden Reinigungsstufe oder Verwertung zugeführt

Die erfindungsgemäße Vorrichtung weist femer für eine solche Reinigungsvorrichtung ein Kontrollsystem auf, welches wenigstens einen, vorzugsweise eine Vielzahl von Prozessparametem des Wassers erfasst, und wenigstens die Zugabe eines Additivs in Abhängigkeit dieser Prozessparameter kontrolliert.

Als Kontrollsystem werden hierbei Systeme verstanden, die neben einer Rechnereinheit, mehreren Sensoren zur Bestimmung vorgegebener Prozessparameter aufweisen und u.a. die hiermit gewonnenen Informationen zur Kontrollierung, vorzugsweise zum Steuern und/oder Regeln des Prozesses verwenden. So kann mit Hilfe dieser Prozessparameter beispielsweise die Zugabe wenigstens eines Additivs in den zu reinigenden Wasserstrom kontrolliert, das heißt geregelt bzw. gesteuert werden, wobei die Vorrichtung wenigstens eine Dosierstelle aufweist, die die Zugabe eines ersten Additivs vor der Entspannung des Wasserstroms ermöglicht.

Als Additiv werden gemäß der vorliegenden Erfindung Hitfsstoffe verstanden, welche vorzugsweise aus einer Gruppe ausgewählt werden, welche beispielsweise kationische und anionische Flockungsmittel, wie beispielsweise Polyacrylamid, Polyethylenimin, Bentonit, Wasserglas, Polyamidamin, Poly-aluminiumchlorid, Alaun, Stärke, modifizierte Stärke, Carboxymethylcellulose, mineralische Stoffe, Glyocsal, Kombinationen hiervon und dergleichen, Säuren und/oder Basen, wie beispielsweise Natronlauge, Natriumaluminat, Aluminiumhydroxid, Schwefelsäure, Kalilauge, organische Säuren und organische Basen, Reduktionsmittel, Oxidationsmittel, Kombinationen hieraus und dergleichen, aufweist. Ferner können als solche Additive Wässer d.h. weitgehend wässrige Flüssigkeiten verwendet werden, weiche beispielsweise in anderen Prozessen, insbesondere bei der Abwasseraufbereitung und/oder Reinigung entstehen und vorzugsweise alkalisch konditioniert sind.

Als Prozessparametem werden gemäß der vorliegenden Erfindung Parameter verstanden, die aus einer Gruppe ausgewählt werden, weiche beispielsweise die Geschwindigkeit, die Menge, den Druck, die Temperatur, den pH-Wert, den Anteil an Kationen, den Anteil an Anionen, den Anteil an organischen Substanzen, den Anteil an Feststoffen, die Viskosität, die Oberflächenspannung, den Ladungszustand, den Salzgehalt, die Härte, Reaktionszeit, Einwirkzeit, Ladungsdichte. Kombinationen hieraus und dergleichen aufweist.

In einer weiteren Ausführungsform ist der Vorrichtung wenigstens eine weitere Reinigungsvorrichtung vorgeschaltet. Dies kann, wie im Stand der Technik bekannt, beispielsweise eine mechanische, eine chemische und/oder physikalische, eine biologische Stufe oder eine Kombination hieraus und dergleichen sein.

Gemäß einer weiteren besonders bevorzugten Ausführungsform weist der Zulauf der Vorrichtung eine Vielzahl von Zuführungsleitungen, das heißt eine Vielzahl von Wasserströmen, auf, wobei wenigstens ein Teil des darin geförderte Wasser verdichtet und mit einer vorgegebenen Menge an Gas versetzt wird. Vorzugsweise werden entsprechend der vorstehenden Ausführung die Wasserströme nachfolgend zusammengeführt und anschließend einer Expansion und Trennung zugeführt.

Es liegt ferner auch im Sinn der vorliegenden Erfindung, dass die Verdichtung bzw. Druckerhöhung des Wasserstroms durch die Zugabe des komprimierten Gases erfolgt.

Es sei ferner darauf hingewiesen, dass die vorstehend beschriebene Vorrichtung auch in ihrer Funktion zu verstehen ist bzw. die nachfolgend beschriebenen Verfahrensschritte auch die hiermit verwendeten Aggregate bzw. Vorrichtungen erfassen, um die entsprechenden Verfahrensschritte durchführen zu können. Auch umfassen die Verfahren die hierfür notwendigen Vorrichtungen, die entsprechend Bestandteil der erfindungsgemäßen Vorrichtung sind.

Die Aufgabe wird auch durch das erfindungsgemäße Verfahren zur Reinigung von Wasser gelöst, wobei das Verfahren insbesondere auch zur kontinuierlichen Reinigung von Wasser in der Papierindustrie verwendet wird und wenigstens das Verdichten wenigstens eines Teilstromes des zulaufenden Wassers aufweist, in welchem wenigstens eine vorgegebene Menge eines Gases, insbesondere komprimierte Luft, gelöst wird.

Dieser verdichtete Wasserstrom, in welchem eine vorgegebene Menge an Gas gelöst ist, wird nachfolgend entspannt, wobei hierdurch feine Blasen entstehen, an weichen insbesondere Feststoffe des Wasserstromes gebunden werden.

Wie bereits zur Vorrichtung ausgeführt, können nun die unterschiedlichen Phasen voneinander getrennt werden, wobei das erfindungsgemäße Verfahren dadurch gekennzeichnet ist, dass dem gereinigten Wasserstrom nach dem Verdichten in Abhängigkeit von vorgegebenen Prozessparametem wenigstens ein erstes Additiv zudosiert wird.

Nachfolgend wird an einem vorgegebenen Ort, insbesondere in einem Ruhebereich, der Wasserstrom entspannt.

Das Verfahren ist gemäß einer weiteren, bevorzugten Ausführungsform **dadurch gekennzeichnet, dass** wenigstens ein Teil des Wasserstromes, weicher dem Verfahren zugeführt wird, in wenigstens einer weiteren Reinigungsstufe vorbehandelt wurde. Solche Reinigungsstufen können, wie im Stand der Technik bekannt, mechanische, physikalische, anaerobe, aerobe Reinigungsstufen und Kombinationen hiervon und dergleichen sein.

Es liegt ferner auch im Sinn der vorliegenden Erfindung, dass die Verdichtung und das Lösen eines Gases in einem gereinigten Wasserstrom erfolgen, dessen Prozessparameter sich deutlich von den Prozessparametem des zu reinigenden Wassers unterscheiden.

Gemäß einer weiteren besonders bevorzugten Ausführungsform wird dem zu reinigenden Wasser, vorzugsweise dem Hauptwasserstrom, vor der Verdichtung bzw. vor dem Lösen eines Gases in dem Wasser wenigstens ein zweites Additiv zudosiert, das vorzugsweise in Abhängigkeit von vorgegebenen Prozessparametem dosiert wird.

Es sei ferner darauf hingewiesen, dass es selbstverständlich auch eine Vielzahl von Additiven zusammen oder an unterschiedllchen Dosierstellen dem Wasserstrom zugegeben werden können, um insbesondere die notwendige Reaktionszeit der einzelnen. Hilfsmittel und auch Wechselwirkungen der Additive zu berücksichtigen.

Gemäß einer weiteren besonders bevorzugten Ausführungsform wird das erfindungsgemäße Verfahren nur für einen Teilstrom des Wassers aus einer vorgeschalteten Reinigungsstufe eingesetzt, wobei es selbstverständlich auch im Sinn der vorliegenden Erfindung ist, den Vollstrom des Wassers aus einer vorgeschalteten Reinigungsstufe mit dem erfindungsgemäßen Verfahren zu behandeln.

Gemäß einer weiteren bevorzugten Ausführungsform erfolgt das Lösen der vorgegebenen Menge an Gas mittels einer Injektionseinrichtung unter vorgegebenen Prozessbedingungen, wobei solche Injektionseinrichtungen beispielsweise Düsen oder Diffusoren sein können, die insbesondere eine gleichmäßige Durchmischung des Wassers mit dem Gas bewirkten. Solche Injektionseinrichtungen sind im Stand der Technik bekannt.

Die Erfindung richtet sich ferner auch auf die Verwendung der vorgenannten Vorrichtung bzw. des vorgenannten Verfahrens zur Reinigung von Wasser, Insbesondere zur kontinuierlichen Trennung von Salzen, Feststoffen und/oder Gasen aus Flüssigkeiten, wie sie beispielsweise Im Produktionsprozess für die Paplerherstellung verwendet werden.

Die Erfindung wird nachfolgend anhand verschiedener Ausfuhrungsbeisplele näher erläutert, wobei ausdrücklich darauf hingewiesen wird, dass es sich hierbei nur um einige mögliche Anwendungen des erfindungsgemäßen Verfahrens bzw. der erfindungsgemäßen Vorrichtung handelt und dass es selbstverständlich auch im Sinne der vorliegenden Erfindung liegt, das Verfahren und die Vorrichtung alternativ, insbesondere In anderen Kombinationen, zu verwenden. Dies bedeutet, beispielsweise das Verfahren oder die erfindungsgemäße Vorrichtung zur Reinigung von Wasser zu verwenden, wie sie beispielsweise In anderen Industriezweigen welche zum Beispiel Molkereien die Baustoffindustrie. metallverarbeitende und - erzeuqende industrie. etc. sind oder aber auch In der kommunalen Abwasserklärung zugrunde liegen.

So zeigen:
- Fig. 1: ein Blockschaltbild für die Anordnung der erfindungsgemäßen Vorrichtung zur Reinigung von Wasser.
- Fig.2: ein weiteres. Blockschaltbild für die erfindungsgemäße Vorrichtung zur Reinigung eines Abwasser;

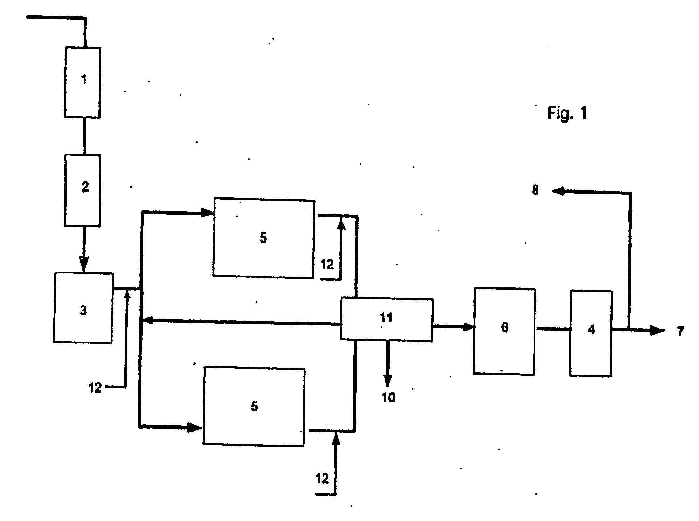

Fig.1 zeigt auf der linken Seite den Zuführungsbereich eines zu reinigenden Wassers, in welchem beispielsweise eine Kombination von verschiedenen Vorrichtungen angeordnet sein kann, welche die Eindickung bzw. Lagerung 1, eine Vorreinigung 2 bzw. ein Mischen und Ausgleichen 3. des zuzuführenden Wassers bewirken. Seibstverständltch können die hier einzeln dargestellten Vorrichtungen 1, 2, 3 auch miteinander kombiniert werden.

Gemäß dem hier dargestellten Ausführungsbeisplel weist solch ein Wasser neben den verschiedenen Begleitstoffen u.a. einen Härtegrad auf, der zwischen 80 und 100° deutscher Härte liegt. Dieses Wasser wird In einen weiteren Vorlagebehälter (nicht dargestellt) geführt, in welchem insbesondere zur Konditionierung weiteres Wasser zugeführt 12 wird, um insbesondere eine hydrodynamischen Konsistenz für die Anlage sicher zu stellen. Hierbei wird das zu reinigende Wasser verdünnt, wobei sich hierdurch beispielsweise der Härtegrad dahingehend reduziert dass er; in Abhängigkeit der Verdünnung, zwischen 25° und 500° deutscher Härte (dH) bevorzugt zwischen 25° und 80°dH und besonders bevorzugt zwischen 40° und 80° dH liegt.

Dieses Wasser wird nun einer weiteren Vorreinigungsstufe 5 zugeführt, die beispielsweise mit anaeroben Prozessbedingungen eine Reduzierung von Inhaltsstoffen des Wassers bewirkt. Selbstverstdndlich können auch andere Reinigungsvorrichtungen verwendet werden, wobei das hierdurch aufbereitete Wasser gemäß der vorliegenden Erfindung entweder im Vollstrom oder Im Teilstrom der erfindungsgemäßen Vorrichtung 11 zugeführt wird.

Die in dieser Stufe ausgetragenen Begleitstoffe, wie beispielsweise Kalziumverblndungen wie beispeilsweise Kalk, Gios andere Erdalkaliverbindungen, CSB -Fracht oder Feststoffe, werden vorzugsweise der Entsorgung 10 zugeführt bzw. hiervor nach den bekannten Methoden eingedickt und dann entsorgt. Alternativ hierzu können die Begleitstoffe auch als Sedimentationshilfe für wenigstens eine biologische Reinigungsstufe, vorzugsweise für den Belebtschlamm, verwendet werden. Es liegt auch im Sinn der vorliegenden Erfindung, dass die ausgetragenen Begleitstoffe einer Wiederverwertung zugeführt werden, wobei dies beispielsweise durch die Verwendung der Begleitstoffe als Zuschlagstoffe für Baumsterialien oder dergleichen erfolgen kann.

Das so gereinigte Wasser wird über einen Vorlagebehälter einer weiteren Reinigungsstufe 6 zugeführt, welche beispielsweise als aerobe Biologie zur weiteren Reduzierung insbesondere der CSB-Fracht verwendet wird. Gemäß dem hier dargestellten Ausführungsbeispiel wird hieran anschließend das gereinigte Wasser in einem Ausgleichsbecken 3 zusammengeführt und beispielsweise in einem Vorfluter 7 oder in den Produktionsprozess 8 zurückgeführt.

Erfindungsgemäß können auch Teile des gereinigten Wassers aus der Vorrichtung 11 zurück in die Konditionierung d.h. im Kreis gefahren werden.

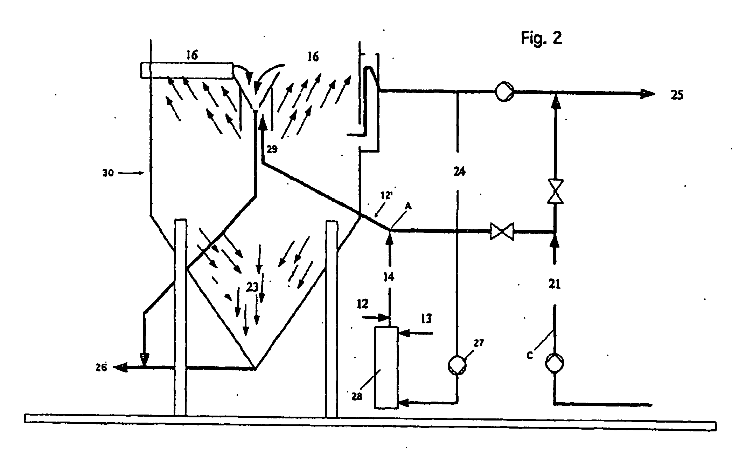

Fig. 2 zeigt nun detaillierter eine mögliche Installation der erfindungsgemäßen Vorrichtung, bei welcher dem Hauptwasserstrom 21 ein verdichteter und mit Luft 13 gesättigter Wasserstrom 14 beigemischt wird.

Wie in diesem Ausführungsbeispiel dargestellt, wird gereinigtes Wasser 25 über die Leitung 24 einem Druckbehälter über eine Pumpe 27 zugeführt und Innerhalb diesem mit Luft 13 beaufschlagt. Im Anschluss wird am Punkt 12 ein erstes Hilfsmittel dosiert.

Hierbei liegen gemäß einer besonders bevorzugten Ausführungsform die Drücke des verdichteten Wassers im Bereich zwischen 2 und 10 bar, bevorzugt zwischen 3 und 7 bar und besonders bevorzugt zwischen 5 und 6 bar.

Die Durchmischung der beiden Wasserstrom beginnt gemäß der hier dargestellten Ausführungsform bei der Position A, wobei unter Umständen für die gleichmäßige Durchmischung der beiden Ströme besondere Vorkehrungen getroffen sind. Dies können beispielsweise eine Vielzahl von Eintassöffnungen sein, die auf dem Umfang der Hauptleitung angebracht sind, um insbesondere eine gleichmäßige Durchmischung der beiden Teilströme zu bewirken.

Auch alternative Methoden, wie sie im Stand der Technik bekannt sind, können verwendet werden. An der Position 12 wird ferner gemäß diesem Ausführungsbeispiel ein erstes Additiv dosiert, wobei gemäß einer besonders bevorzugten Ausführungsform als Regeltypparameter eine Prozessgröße am Auslauf 25 des gereinigten Wassers verwendet wird. Dies ist der pH-Wert.

Gemäß einem besonders bevorzugten Ausführungsbeispiel kann ein solches Additiv vorzugsweise eine alkalisch konditionierte Flüssigkeit sein, deren pH-Wert in einen anderen Prozess auf einen vorgegebenen Wert eingestellt wurde. Solche Wässer fallen zum Beispiel bei der Abwasserrelnigung oder auch bei der Reinigung in der Papierindustrie wie beispielsweise in Wäschern an (Waschwässer), wenn diese zum Beispiel alkalische konditioniert wurden. Diese, vorzugsweise alkalisch konditionierten Wässer, können dann vorzugsweise zur Einstellung wenigstens einer Prozessgröße, wie beispielsweise dem pH-Wert, des zu reinigenden Wassers verwendet werden.

In Abhängigkeit der hier erzielten Richtgrößen wird die Menge an Additiv am Punkt 12 dosiert. So kann durch die Dosierung einer Base der pH-Wert gesteuert werden. Das so vorbereitete Wasser wird in den Ruhebereich, der wie hier dargestellt innerhalb einer Mikroflotation angeordnet ist, geführt, in welcher die Expansion des Wasserstromes erfolgt. Die sich hierbei bildenden Blasen tragen wenigstens einen Teil der Begleitstoffe des Wassers als Flotat 16 an die Wasseroberfläche bzw. in dem Fall, dass die Auftriebskraft der Bläschen nicht ausreicht, sinken die angelagerten Schwebstoffe als Sediment 23 zum Boden des Behälters. Sowohl das Flotat als auch das Sediment werden abgezogen und zusammen oder getrennt, beispielsweise In einen Dünnschlammbehälter 26, zur weiteren Behandlung oder Verwertung zugeführt

Im oberen Drittel des Behälters wird das gereinigte Abwasser 25 abgeführt.

Gemäß einer weiteren, besonders bevorzugten Ausführungsform wird dem Haupfinrasserstrom an den Positionen C und/oder D ein weiteres Hilfsmittel (zweites Additiv) zugeführt, um insbesondere vor der Versetzung des Hauptwasserstroms mit einem gasgesättigten Wasser durch die Zugabe von beispielsweise Flockungsmitteln die Größe der Feststoftbestandteile im Abwasserstrom im Sinne einer Flockung bei Aggregatbildung zu erhöhen, um somit eine nachfolgende Behandlung zu verbessern.

Durch diese Anordnung können neben den Feststoffen auch gelöste Bestandteile des Wasserstroms ausgefällt werden, wobei insbesondere Calciumcarbonat oder Magnesiumcarbonat ausfallen, wenn der pH-Wert einen kritischen Grenzbereich überschreitet bzw. an den kritischen Grenzbereich gezielt herangeführt wird.

Ferner kann durch diese Prozessführung, entsprechend allgemeiner bekannter chemischer und physikalischer Gesetzmäßigkeiten, das Löslichkeitsgleichgewicht verschoben werden und somit gezielt durch die Einstellung des pH-Werts die Bildung von Ausfällungen gefördert werden.

Ferner wird durch die Verwendung der Entspannung eines komprimierten und mit Gas versetzten Wassers Kohlendioxid aus dem Wasser abgeführt, wodurch zusätzlich eine pH-Wert-Verschlebung (Erhöhung) stattfindet. Ferner können mittels dieses Verfahrens auch Begleitstoffe des Wassers oxidiert werden (z.B. reduzierte Schwefehrerbindungen, wie sie beispielsweise in einem anaeroben Reaktor entstehen könnten) und es kann somit auch die oxidative Umwandlung von geruchsintensiven Stoffen bewirkt werden.

Durch das erfindungsgemäße Verfahren werden neben den Feststoffen somit u.a. Carbonate sowohl mit dem Flotat, als auch mit dem Sediment abgeleitet, wobei das somit enthärtete Wasser darüber hinaus deutlich von organischer Fracht befreit wird. Zur Bewertung eines solchen Wassers werden insbesondere Kenngrößen oder Parameter, wie sie im Stand der Technik als CSB, BSB, OTS, organische Säuren und Schwefelverblndungen bekannt sind, verwendet.

Das Verfahren kann ferner auch derart gesteuert werden, dass der Enthärtungs- und der Separierungsprozess mit geeigneten organischen und/oder anorganischen Polyelektrotyten, z.B. mit entsprechenden Absorptions- bzw. Adsorptionshilfsmitteln, zlelwertgesteuert kontrolliert wird. Dies kann insbesondere auch zu den gewünschten Ergebnissen führen, dass eine sichere und kostengünstige Anlage betrieben wird.
1. Eindickung allgemein
2. Vorreinigung
3. Ausgleichsbehälter
4. Vorlagebehälter allgemein
5. ANAEROBIE
6. AEROBIE
7. Ablauf Biologie
8. Rückführung Ablauf Biologie
9. Gasbehälter
10. Kalkaustrag
11. Aggregat Kalkfalle
12. Konditionienrung, Einstellung des pH-Wertes
13. Druckluft
14. Ablauf Luftdisperslonsreaktor
15. Regelung pH Wert
16. Flotatbildung
17. Pelletspelcher
18. Vorversäuerung
19. Kreislaufleitung,Ringleitung
20. Zulauf ANAEROBIE
21. Abwasser allgemein
22. Zulauf Betebtschlammanlage
23. Sediment
24. Zulauf Luftdispersionsreaktor
25. Ablauf Kalkfalle
26. Direkteinleltung Belebungsbecken
27. Pumpe
28. Verdichtungsvorrichtung
29. Expansionseinrichtung
30. Vorrichtung zum Trennen unterschiedlicher Phasen

## Patentansprüche

1. Vorrichtung zur Reinigung von Wasser, insbesondere zur kontinuierlichen Reinigung von Wasser in der Papierindustrie, mit
wenigstens einem Zulauf für das zu reinigende Wasser mit einer Vorreinigungsstufe (5), einer Kalkfalle (11) und wenigstens einem Ablauf für das gereinigte Wasser mit einer weiteren Reinigungsstufe (6) mit Vorliegebehälter und dann Ausgleichbecken
**dadurch gekennzeichnet, dass** die Vorrichtung
einen weiteren Vorlagebehälter aufweist, in dem weiteres Wasser zur Verdünnung des zu reinigenden Wassers auf einen Härtegrad zwischen 4,46 mmol/l (25°dH) und 89,15 mmol/l (500°dH) zugeführt wird,
eine Verdichtungseinrichtung (28) für einen Teilstrom des gereinigten Wassers,
eine Injektionseinrichtung zur Injektion von Luft (13) in das verdichtete Wasser,
eine Expansionseinrichtung (29) zur Expansion wenigstens eines Teilstroms des zu reinigenden Wassers vermischt mit dem Teilstrom des verdichteten und gereinigten Wassers
eine Vorrichtung zum Trennen (30) von unterschiedlichen Phasen zur Reinigung des Wassers aufweist und
die Vorrichtung wenigstens ein Steuersystem aufweist, welches uber einen Dosierpunkt (12) die Zugabe wenigstens einer Base in den verdichteten und mit Luft versetzten Teilstrom in Abhängigkeit des pH-Wertes in der Art steuert, dass aufgrund der Verschiebung des Löslichkeitsgleichgewichtes der Carbonate, welche in dem zu reinigenden Wasser enthalten sind, Ausfällungen gebildet werden.

2. Vorrichtung gemäß Anspruch 1, **dadurch gekennzeichnet, dass**
der Vorrichtung wenigstens eine weitere Reinigungsvorrichtung (5) vorgeschaltet ist.

3. Vorrichtung gemäß wenigstens einem der Ansprüche 1 bis 2, **dadurch gekennzeichnet, dass** der Zulauf (21) der Reinigungseinrichtung eine Vielzahl von Zuführungsleitungen aufweist, wobei eingeneinsten Teilstrom (24) in einem Druckbehälter
mittels einer Pumpe verdichtet (28) wird und mit einer vorgegebenen Menge an Luft (13) versetzt wird.

4. Verfahren zur Reinigung von Wasser in einer Vorrichtung gemäß eine der Ansprüche 1 bis 3, insbesondere zur kontinuierlichen Reinigung von Wasser in der Papierindustrie, mit den Schritten:
- Vorreinigen (5) des zu reinigenden Wasserstoms :
- Verdünnen des zu reinigenden Wassers auf einen Härtegradwert zwischen 4,46 mmol/l (25°dH) und 89,15 mmol/l (500°dH);
- Verdichten (28) eines gereinigten Teilstroms (24) des zulaufenden Wassers;
- Lösen einer vorgegebenen Menge an Luft (13) im verdichteten und gereinigten Wasser;
- Entspannen des beiden Wasserströme (29);
- Trennen von unterschiedlichen Phasen der beiden Wasserströme (30) und
- Nachreinigen (6) des gereinigten Wassers,
**dadurch gekennzeichnet, dass**
dem gereinisten Teil Wasserstrom nach dem Verdichten in Abhängigkeit eines vorgegebenen pH-Wertes wenigstens eine Base als erstes Additiv in der Art zudosiert wird, dass das Löslichkeitsgleichgewicht von Carbonaten zur Bildung von Ausfällungen in dem zu reinigenden Wasser verschoben wird.

5. Verfahren gemäß Anspruch 4, **dadurch gekennzeichnet, dass**
dem Wasser, vorzugsweise dem Hauptwasserstrom vor der Zugabe der gelösten und/oder zu lösenden Luft wenigstens ein zweites Additiv (C, D) in Abhängigkeit von weiteren vorgegebenen Betriebsparametern in einem vorgegebnen Verhältnis zudosiert wird.

6. Verfahren gemäß Ansprüche 5, **dadurch gekennzeichnet, dass**
die Prozessparameter des Wassers aus einer Gruppe von Parametern ausgewählt werden, welche die Geschwindigkeit, die Menge, den Druck, die Temperatur, den Anteil an Kationen und/oder Anionen, den Anteil an organischen Substanzen, den Anteil an Feststoffen, die Viskosität, die Oberflächenspannung, den Ladungszustand z.B. das zeta-Potential, Ladungsbedarf, Ladungsdicht Kombinationen hieraus aufweist.

7. Verfahren gemäß einem der Ansprüche 5 bis 6 **dadurch gekennzeichnet, dass**
die Additive aus einer Gruppe von Hilfsstoffen ausgewählt werden, welche kationische und anionische Flockungsmittel, wie beispielsweise Polyaluminiumchlorid, Alaun, Polyethylenimin, Bentonite, und Säuren und/oder Basen wie beispielsweise Natronlauge, Schwefelsäure, Kalilauge, organische Säuren und organische Basen, Kombinationen hieraus aufweist.

8. Verfahren gemäß einem der Ansprüche 4 bis 7, **dadurch gekennzeichnet, dass**
nur ein Teilstrom des zu reinigenden Wassers aus einer vorgeschalteten Reinigungsstufe dem Reinigungsverfahren gemäß wenigstens einem der vorstehenden Ansprüche zugeführt wird.

9. Verfahren gemäß einem der Ansprüche 4 bis 8, **dadurch gekennzeichnet, dass**
der Vollstrom des zu reinigenden Wassers aus einer vorgeschalteten Reinigungsstufe
dem Reinigungsverfahren gemäß wenigstens einem der vorstehenden Ansprüche zugeführt wird.

10. Verfahren gemäß einem der Ansprüche 4 bis 9, **dadurch gekennzeichnet, dass**
die Trennung der unterschiedlichen Phasen des Wassers nach der Entspannung in wenigstens einer Ruhezone erfolgt.

11. Verfahren gemäß einem der Ansprüchen 4 bis 10, **dadurch gekennzeichnet, dass**
das Lösen einer vorgegebenen Menge an Luft mittels einer Injektionseinrichtung unter vorgegebenen Prozessbedingungen erfolgt.

12. Verfahren gemäß einem der Ansprüche 4 bis 11, **dadurch gekennzeichnet, dass**
wenigstens ein Teil der abgetrennten Stoffe aus dem zu reinigenden Wasser einer biologischen Reinigungsstufe zugeführt wird.

## Claims

1. Device for purifying water, in particular for continuously purifying water in the paper industry, having
at least one feed for the water to be purified with a pre-purification stage (5), a lime trap (11) and at least one outlet for the purified water with a further purification stage (6) with a storage tank and then equalisation reservoir
**characterised in that** the device has
a further storage tank in which further water is supplied for diluting the water to be purified to a hardness between 4.46 mmol/l (25°dH) and 89.15 mmol/l (500°dH),
a compression means (28) for a partial stream of the purified water,
an injection means for injecting air (13) into the compressed water,
an expansion means (29) for expanding at least a partial stream of the water to be purified mixed with the partial stream of the compressed and purified water,
a device for separating (30) different phases for purifying the water, and
the device has at least one control system which controls the addition of at least one base via a metering point (12) to the compressed partial stream to which air is added as a function of the pH in such a manner that precipitates are formed owing to the shift in the solubility equilibrium of the carbonates contained in the water to be purified.

2. Device according to Claim 1, **characterised in that**
the device is situated upstream of at least one further purification device (5).

3. Device according to at least one of Claims 1 to 2, **characterised in that**
the feed (21) of the purification means has a plurality of feed lines, wherein a purified partial stream (24) is compressed in a pressurised tank by means of a pump (28) and a predefined quantity of air (13) is added thereto.

4. Method for purifying water in a device according to one of Claims 1 to 3, in particular for continuously purifying water in the paper industry, having the steps:
- pre-purifying (5) the water stream to be purified;
- diluting the water to be purified to a hardness between 4.46 mmol/l (25°dH) and 89.15 mmol/l (500°dH);
- compressing (28) a purified partial stream (24) of the fed water;
- dissolving a predefined quantity of air (13) in the compressed and purified water;
- decompressing the two water streams (29);
- separating different phases of the two water streams (30), and
- post-purifying (6) the purified water,
**characterised in that**
at least one base is metered as a first additive into the purified partial water stream after compression as a function of a predefined pH in such a manner that the solubility equilibrium of carbonates is shifted to form precipitates in the water to be purified.

5. Method according to Claim 4, **characterised in that**
at least one second additive (C, D) is metered into the water, preferably into the main water stream before the addition of the dissolved air and/or the air to be dissolved, in a predefined ratio as a function of further predefined operating parameters.

6. Method according to Claim 5, **characterised in that**
the process parameters of the water are selected from a group of parameters including the speed, quantity, pressure, temperature, proportion of cations and/or anions, proportion of organic substances, proportion of solids, viscosity, surface tension, charge, e.g. zeta potential, charge consumption, charge density, and combinations thereof.

7. Method according to one of Claims 5 to 6, **characterised in that**
the additives are selected from a group of additives including cationic and anionic flocculation agents, such as polyaluminium chloride, alum, polyethyleneimine, bentonite, and acids and/or bases such as sodium hydroxide solution, sulphuric acid, potassium hydroxide solution, organic acids and organic bases, and combinations thereof.

8. Method according to one of Claims 4 to 7,
**characterised in that**
only a partial stream of the water to be purified is fed from an upstream purification stage to the purification method according to at least one of the preceding claims.

9. Method according to one of Claims 4 to 8,
**characterised in that**
the entire stream of the water to be purified is fed from an upstream purification stage to the purification method according to at least one of the preceding claims.

10. Method according to one of Claims 4 to 9,
**characterised in that**
the different phases of the water are separated after decompression in at least one rest zone.

11. Method according to one of Claims 4 to 10,
**characterised in that**
a predefined quantity of air is dissolved by means of an injection means under predefined process conditions.

12. Method according to one of Claims 4 to 11,
**characterised in that**
at least some of the substances separated out of the water to be purified are fed to a biological purification stage.

## Revendications

1. Dispositif pour l'assainissement de l'eau, en particulier pour l'assainissement continu de l'eau dans l'industrie du papier, avec
au moins une arrivée pour l'eau à assainir, avec une étape de pré-assainissement (5), un piège à calcaire (11) et au moins une évacuation pour l'eau assainie, avec une étape de purification supplémentaire (6) avec un bac collecteur suivi d'un bassin de compensation,
**caractérisé en ce que** le dispositif comporte :
un bac collecteur supplémentaire, dans lequel est alimentée une autre eau destinée à diluer l'eau à assainir, à un degré de dureté entre 4,46 mmol/l (25°dH) et 89,15 mmol/l (500°dH),
un dispositif de concentration (28) pour un flux partiel d'eau assainie,
un dispositif d'injection pour injecter de l'air (13) dans l'eau concentrée,
un dispositif de détente (29) pour la détente d'au moins un flux partiel de l'eau à assainir, mélangé avec le flux partiel de l'eau concentrée et assainie,
un dispositif pour la séparation (30) de différentes phases pour l'assainissement de l'eau, et
**en ce que** le dispositif comporte au moins un système de commande permettant de commander de telle manière l'ajout d'au moins une base dans le flux partiel concentré et injecté d'air, par le biais d'un point de dosage, en fonction de la valeur de pH, que des sédiments se forment en raison du décalage de l'équilibre de solubilité des carbonates contenus dans l'eau à assainir.

2. Dispositif selon la revendication 1, **caractérisé en ce que**
au moins un dispositif d'assainissement supplémentaire (5) est raccordé en amont du dispositif.

3. Dispositif selon au moins l'une des revendications 1 à 2, **caractérisé en ce que**
l'arrivée (21) du dispositif d'assainissement comporte une multitude de conduites d'arrivée, où un flux partiel assaini (24) est concentré au moyen d'une pompe (28) dans un réservoir sous pression et aéré avec une quantité prédéfinie d'air (13).

4. Procédé pour l'assainissement de l'eau dans un dispositif selon l'une des revendications 1 à 3, en particulier pour l'assainissement continu de l'eau dans l'industrie du papier, avec les étapes suivantes :
- pré-assainissement (5) du flux d'eau à assainir .
- dilution de l'eau à assainir, à un degré de dureté entre 4,46 mmol/l (25°dH) et 89,15 mmol/l (500°dH) ;
- concentration (28) d'un flux partiel assaini (24) de l'eau alimentée
- injection d'une quantité d'air prédéfinie (13) dans l'eau concentrée et assainie ;
- détente des deux flux d'eau (29) ;
- séparation de différentes phases des deux flux d'eau (30), et
- assainissement supplémentaire (6) de l'eau assainie,
**caractérisé en ce que**
au moins une base est ajoutée de telle manière en tant que premier adjuvant au flux d'eau partiel assaini, en fonction d'une valeur de pH prédéfinie, que l'équilibre de solubilité des carbonates pour la formation de sédiments dans l'eau à assainir est décalé.

5. Procédé selon la revendication 4, **caractérisé en ce que**
au moins un deuxième adjuvant (C, D) est ajouté dans l'eau, de préférence dans le flux d'eau principal, selon un rapport prédéfini, avant l'ajout d'air dissous et/ou à dissoudre, en fonction d'autres paramètres de fonctionnement prédéfinis.

6. Procédé selon la revendication 5, **caractérisé en ce que**
les paramètres de processus de l'eau sont sélectionnés à partir d'un groupe de paramètres comprenant la vitesse, la quantité, la pression, la température, la part de cations et/ou d'anions, la part de substances organiques, la part de matières solides, la viscosité, la tension de surface, l'état de chargement, par exemple le potentiel zêta, le besoin de chargement, la densité de chargement, et des combinaisons de ceux-ci.

7. Procédé selon l'une des revendications 5 à 6, **caractérisé en ce que**
les adjuvants sont sélectionnés à partir d'un groupe de matériaux auxiliaires comprenant des agents floculants cationiques et anioniques, tels que par exemple le chlorure de poly-aluminium, l'alun, le polyéthylèneimine, la bentonite, et des acides et/ou des bases, tels que par exemple la lessive de soude, l'acide sulfurique, la lessive de potasse, des acides organiques et des bases organiques, et des combinaisons de ceux-ci.

8. Procédé selon l'une des revendications 4 à 7, **caractérisé en ce que**
seul un flux partiel de l'eau à assainir, issue d'une étape d'assainissement en amont, est alimenté dans le procédé d'assainissement selon au moins l'une des revendications précédentes.

9. Procédé selon l'une des revendications 4 à 8, **caractérisé en ce que**
le flux complet de l'eau à assainir, issue d'une étape d'assainissement en amont, est alimenté dans le procédé d'assainissement selon au moins l'une des revendications précédentes.

10. Procédé selon l'une des revendications 4 à 9, **caractérisé en ce que**
la séparation des différentes phases de l'eau est réalisée après la détente dans au moins une zone de repos.

11. Procédé selon l'une des revendications 4 à 10, **caractérisé en ce que**
la dissolution d'une quantité prédéfinie d'air est réalisée au moyen d'un dispositif d'injection, dans des conditions opérationnelles prédéfinies.

12. Procédé selon l'une des revendications 4 à 11, **caractérisé en ce que**
au moins une partie des matières séparées de l'eau à assainir est alimentée vers une étape d'assainissement biologique.
